# EUROPÄISCHE PATENTSCHRIFT

(11) **EP 0 402 693 B1**
(45) Veröffentlichungstag und Bekanntmachung des Hinweises auf die Patenterteilung: **20.03.1996**
(21) Anmeldenummer: 90110164.2
(22) Anmeldetag: 29.05.1990
(51) Int. Cl.: F02C 3/08, F23R 3/54, F01D 5/08

(54) **Gasturbinentriebwerk mit Diagonal-Verdichter**
Gasturbine with mixed-flow compressor
Turbine à gaz avec compresseur à écoulement mixte

(30) Priorität: 10.06.1989 DE 3919097
(43) Veröffentlichungstag der Anmeldung: 19.12.1990
(73) Patentinhaber: MTU MOTOREN- UND TURBINEN-UNION MÜNCHEN GMBH, D-80976 München (DE)
(72) Erfinder: Boffo, Marc, CH-6362 Stansstadt (CH)

(56) Entgegenhaltungen:
- FR-A- 2 576 358
- GB-A- 783 448
- GB-A- 2 123 136
- US-A- 3 365 892
- US-A- 3 546 880

## Beschreibung

Die Erfindung betrifft ein Gasturbinentriebwerk mit Diagonalverdichter und sich daran anschließendem Diagonaldiffusor.

Gasturbinentriebwerke nach GB-A 783 448 mit bekannter Anordnung von Diagonalverdichter und nachgeordnetem Diagonaldiffusor haben den Nachteil einer vergrößerten Baulänge gegenüber Gasturbinentriebwerken mit Radialverdichter und nachgeordnetem Radialdiffusor.

Ein weiterer Nachteil der bekannten Anordnung von Diagonalverdichtern in Gasturbinentriebwerken ist, daß die Brennkammern mit Verdichterluft im Gleichstromverfahren beaufschlagt werden, so daß durch die Flammrohraußenwandung der Brennkammern nachteilig aufgeheizte Verdichterluft dem Heißgasstrom als temperatursenkende Tertiärluft im Auslaßbereich der Flammrohre zugemischt wird.

Aus GB-PS 2 123 136 ist ein mehrstufiger Axialverdichter mit Axialdiffusor bekannt, wobei der Axialdiffusor innerhalb einer Ringbrennkammer angeordnet ist, der die Ringbrennkammer mit Verbrennungsluft im Gegenstrom versorgt, so daß der Nachteil einer Tertiärluftzufuhr zur Temperaturabsenkung im Austrittsbereich der Heißgase aus dem Brenner entfällt. Diese Anordnung hat den Nachteil, daß ein mehrstufiger Axialverdichter mit Axialdiffusor erforderlich ist, da nur diese Verdichterversion einen entsprechend minimalen Außenradius aufweist, der sich problemlos innerhalb einer Ringbrennkammer anordnen läßt.

Aus FR-A 2 576 358 ist ein mehrstufiger Axialverdichter bekannt, dessen Endstufe als Radialverdichter ausgebildet ist. Die Radialverdichterstufe ist innerhalb des Schaufelkranzes der ersten Turbinenstufe angeordnet, wobei ein langgestreckter Ringkanal innerhalb eines Brennkammerringes die durch den Axialverdichter vorverdichtete Luft der Radialverdichterstufe zuführt. Die Radialverdichterstufe bewirkt, daß der Brennkammerring im Gegenstromverfahren mit Verbrennungsluft versorgt wird.

Aufgabe der Erfindung ist es ein gattungsgemäßes Gasturbinentriebwerk zu schaffen, das bei unveränderter Verdichterleistung, die mit einem Radialverdichter erreicht werden kann, einen geringeren Außenradius bei kleinerer oder zumindest gleicher Baulänge aufweist.

Weiterhin soll die Verdichterluftführung und -verteilung im Hinblick auf Kühlungszwecke und Brennkammerversorgung optimal gestaltet werden.

Gelöst wird diese Aufgabe mit den Merkmalen des Anspruchs 1.

Ein Vorteil der erfindungsgemäßen Lösung ist, daß die Baulänge des Diagonaldiffusors nicht die Gesamtlänge des Gasturbinentriebwerks vergrößert, da er innerhalb der Brennkammer angeordnet wird. Dadurch wird das Gasturbinentriebwerk kompakter und im Radius kleiner als ein Gasturbinentriebwerk gleicher Verdichterleistung mit einem Radialverdichter, nachgeschaltetem Radialdiffusor und Krümmer zur Strömungsumlenkung in die Horizontale. Darüber hinaus wurde der Rotor des Diagonalverdichters 1 bezüglich Rotorringe, Rotordurchmesser und Verzögerungsverhältnis optimiert. Als besonders günstig erwiesen sich Rotorschaufeln, die vorne stark gekrümmt sind, damit sie in diesem Bereich stark verzögern.

Zur Umlenkung der Verdichterluft entgegen der Hauptströmrichtung vom Auslaß des Diagonaldiffusors zu den radial außen angeordneten Brennkammern ist eine Prallkammer vorgesehen. In der Prallkammer wird die verdichtete Luft vorteilhaft verwirbelt und an einer Prallwand auf kürzestem Wege den Brennkammern zugeführt.

Durch vorzugsweise Anordnung der Prallwand im Auslaßbereich der Brennkammer werden die Brennkammern bzw. die Ringbrennkammer im Gegenstrom mit Verdichterluft beaufschlagt. Dadurch wird vorteilhaft eine unaufgeheizte Verdichterluft als temperatursenkende Tertiärluft im Auslaßbereich der Flammrohre dem Heißgasstrom zugemischt.

Eine bevorzugte Ausbildung der Erfindung wird dadurch erreicht, daß der Diagonaldiffusor in einem gemeinsamen Ringgehäuse mit einer Ringbrennkammer oder mit ringförmig angeordneten Einzelbrennkammern angeordnet ist. Das verbessert vorteilhaft die Kompaktheit des Gasturbinentriebwerks. Gleichzeitig kann der Außen- und Innenradius des Diagonaldiffusors von der ringförmigen Einlaßöffnung zur ringförmigen Auslaßöffnung vermindert werden, ohne daß die Funktion des Diffusors beeinträchtigt wird. Dieser Vorteil ist mit einem Radialverdichter mit nachgeschaltetem Radialdiffusor nicht erreichbar.

Die Verdichterleistung kann vorzugsweise dadurch erhöht werden, daß dem Diagonalverdichter ein mehrstufiger Axialverdichter vorgeschaltet wird. Diese Anordnung hat den Vorteil, daß Prallkammer und Prallwand mit erhöhtem Verdichterluftdruck versorgt werden.

Ein Teil der Prallwand kann durch einen Teil einer Turbinenscheibe vorzugsweise durch den radial äußeren Bereich der Turbinenscheibe der ersten Turbinenstufe gebildet werden. Dadurch wird vorteilhaft Material und Gewicht eingespart und die Turbinenscheibe gleichzeitig gekühlt.

Eine bevorzugte Ausbildung der Prallwand sieht eine Umfangsdichtung zwischen der Innenwand der Prallkammer und der Turbinenscheibe der ersten Turbinenstufe vor, wobei die Umfangsdichtung am Innenrand der von der Turbinenscheibe gebildeten Prallwand angeordnet ist. Durch diese Ausbildung der Innenwand der Prallkammer und der Umfangsdichtung am Innenrand der Turbinenscheibe wird vorteilhaft die gesamte Prallwand von einem Teil der Turbinenscheibe gebildet. Ein weiterer Vorteil dieser Anordnung ist, daß ein Teil der Verdichterluft ohne zusätzliche Verbindungselemente wie beispielsweise mitrotierende Deckscheiben auf der Turbinenscheibe weiteren Verbrauchern zugeführt werden kann. In einer bevorzugten Ausbildung der Erfindung sind deshalb im Randbereich der Turbinenscheibe Öffnungen vorgesehen, die Kühlkanäle von im Randbereich der Turbinenscheibe befindlichen Turbinenschaufeln mit einem Teil der Verdichterluft, die am Auslaß des Diagonaldiffusors zur Verfügung steht, versorgen.

Weitere Vorteile werden durch die Erfindung möglich, dadurch, daß vorzugsweise eine Lagerkammer einer Turbinenwelle radial innerhalb des Diagonaldiffusors angeordnet ist. Durch diese Anordnung wird die Lagerkammer vor der Hitze der radial außen angeordneten Brennkammern geschützt.

Die folgenden Figuren zeigen Ausführungsbeispiele der Erfindung, wobei
- Fig. 1: eine Verdichterendstufe als Diagonalverdichter mit Brennkammeranordnung und
- Fig. 2: eine Verdichterendstufe als Diagonalverdichter mit Brennkammer und erster Turbinenstufe zeigt.

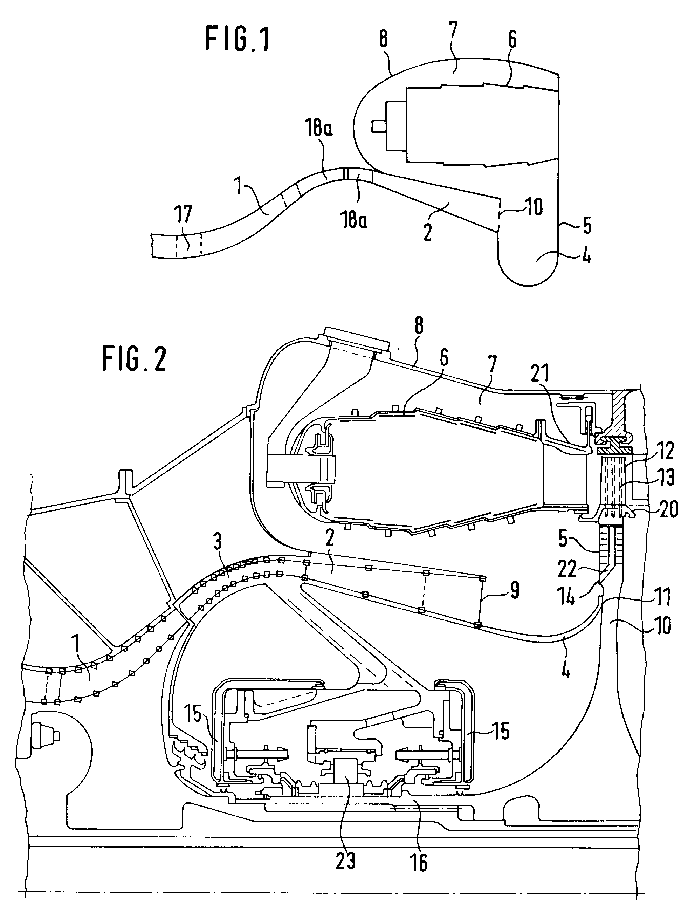

Fig. 1 zeigt eine Verdichterendstufe als Diagonalverdichter 1, die sich an einem achtstufigen Axialverdichter anschließt, von dem das achte Leitgitter 17 angedeutet ist. Die Strömung, die mit 25° bis 29° aus dem Diagonalverdichter 1 austritt wird in einem in die Horizontale umschwenkenden zweigeteilten Leitgitter 18a und 18b mit 40 Schaufeln im ersten Leitgitter 18a und 80 Schaufeln im zweiten Leitgitter 18b umgelenkt. Danach wird die Strömung in einem beispielsweise unbeschaufelten Diagonaldiffusor 2 dessen Außen- und Innendurchmesser zur Prallkammer 4 hin abnehmen von ca. 0,35 auf 0,15 Ma verzögert. Die Verdichterluft wird dann über eine Prallwand 5 der Brennkammer 6, die in einem Ringraum 7 angeordnet ist und mit dem Diagonaldiffusor 2 ein Ringgehäuse 8 bildet, zugeführt.

Diese Anordnung hat nicht nur einen höheren Wirkungsgrad als die bisher bekannten Verdichterendstufen in radialer Bauweise, sondern hat zusätzlich den Vorteil einer geringeren Baulänge und Bauhöhe, da ein erheblicher Anteil der diagonalen Verdichterendstufe unter die Brennkammer 6 geschoben werden kann.

Fig. 2 zeigt eine Verdichterendstufe als Diagonalverdichter 1 mit Brennkammer 6 und erster Turbinenstufe 20. Dabei bildet ein Teil der Turbinenscheibe 10 die Prallwand 5 zur Umlenkung der Strömung in Richtung auf einen Auslaßbereich 21 der Brennkammer 6. In diesem Auslaßbereich 21 wird die Temperatur des Heißgasstromes in der Brennkammer durch Zumischen der aus der Verdichterluft abgezweigten Tertiärluft abgekühlt, bevor das Luft-/Heißgasgemisch über die Turbinenschaufeln 12 und die Turbinenscheibe 10 die Turbinenwelle 16 antreibt. Die Turbinenschaufeln 12 werden über die Kühlkanäle 13 und die Öffnung 14 in dem Bereich der Turbinenscheibe 10, der gleichzeitig als Prallwand 5 dient, mit Kühlluft versorgt, die damit unmittelbar von der Verdichterluft aus dem Diagonaldiffusor 2 abgezweigt wird. Dazu kann die Öffnung 14 als beschaufelte oder berippte Ringnut 22 ausgebildet sein.

Eine Lagerkammer 15 eines Lagers 23 der Turbine ist wie Fig. 2 zeigt so angeordnet, daß die Lagerkammer 16 innerhalb des ringförmigen, unbeschaufelten Diagonaldiffusors 2 liegt, so daß der Diagonaldiffusor 2 gleichzeitig die Funktion einer Wärmebarriere zwischen Brennkammer 6 und Lagerkammer 15 erfüllt.

## Patentansprüche

1. Gasturbinentriebwerk mit Diagonalverdichter (1) und sich daran anschließendem Diagonaldiffusor (2), dadurch gekennzeichnet, daß der Diagonaldiffusor (2) mit einer anschließenden Prallkammer (4) zur Umlenkung der Verdichterluft entgegen der Hauptströmrichtung innerhalb von einer Ringbrennkammer (6) oder einem von mehreren ringförmig angeordneten Einzelbrennkammern gebildeten Ringraum (7) angeordnet ist.

2. Gasturbinentriebwerke nach Anspruch 1, dadurch gekennzeichnet, daß im Bereich des Auslasses (9) des Diagonaldiffusors die Prall kammer (4) und eine Prallwand (5) angeordnet sind.

3. Gasturbinentriebwerk nach Anspruch 1 oder 2, dadurch gekennzeichnet, daß die Ringbrennkammer (6) oder die Einzelbrennkammern und der Diagonaldiffusor (2) in einem gemeinsamen Ringgehäuse (8) angeordnet sind.

4. Gasturbinentriebwerk nach einem der Ansprüche 1 bis 3, dadurch gekennzeichnet, daß der Diagonalverdichter (1) die Endstufe eines mehrstufigen Axialverdichters ist.

5. Gasturbinentriebwerk nach einem der Ansprüche 1 bis 4, dadurch gekennzeichnet, daß eine Turbinenscheibe (10) so angeordnet ist, daß sie einen Teil der Prallwand (5) bildet.

6. Gasturbinentriebwerk nach einem der Ansprüche 3 bis 5, dadurch gekennzeichnet, daß die Prallwand (5) durch den radial äußeren Bereich der Turbinenscheibe (10) einer ersten Turbinenstufe gebildet ist.

7. Gasturbinentriebwerk nach einem der Ansprüche 3 bis 6, dadurch gekennzeichnet, daß zwischen der Innenwand der Prall kammer (5) , und der Turbinenscheibe (10) der ersten Turbinenstufe eine Umfangsdichtung (11) vorgesehen ist, wobei diese am Innenrand der von der Turbinenscheibe (10) gebildeten Prallwand (5) angeordnet ist.

8. Gasturbinentriebwerk nach einem der Ansprüche 1 bis 7, dadurch gekennzeichnet, daß im Randbereich der Turbinenscheibe (10) luftgekühlte Turbinenschaufeln (12) mit Kühlkanälen (13) befestigt sind, die über Öffnungen (14) in der von der Turbinenscheibe gebildeten Prallwand (5) direkt mit dem Auslaß (9) des Diagonaldiffusors (2) verbunden sind.

9. Gasturbinentriebwerk nach einem der Ansprüche 1 bis 8, dadurch gekennzeichnet, daß eine Lagerkammer (15) einer Turbinenwelle (16) radial innerhalb des Diagonaldiffusors (2) angeordnet ist.

## Claims

1. A gas turbine engine with a diagonal compressor (1) and a diagonal diffusor (2) attached thereto, **characterized in that** the diagonal diffusor (2) is arranged, together with an attached impact chamber (4) for deflecting the compressor air contrary to the main flow direction, inside an annular combustion chamber (6) or an annular chamber (7) formed by a plurality of individual combustion chambers arranged in a ring.

2. A gas turbine engine according to Claim 1, **characterized in that** the impact chamber (4) and a baffle wall (5) are arranged in the region of the outlet (9) of the diagonal diffusor.

3. A gas turbine engine according to Claim 1 or 2, **characterized in that** the annular combustion chamber (6) or the individual combustion chambers and the diagonal diffusor (2) are arranged in a common annular housing (8).

4. A gas turbine engine according to one of Claims 1 to 3, **characterized in that** the diagonal compressor (1) is the end stage of a multiple-stage axial compressor.

5. A gas turbine engine according to one of Claims 1 to 4, **characterized in that** a turbine disc (10) is arranged in such a way that it forms part of the baffle wall (5).

6. A gas turbine engine according to one of Claims 3 to 5, **characterized in that** the baffle wall (5) is formed by the radially outer area of the turbine disc (10) of a first turbine stage.

7. A gas turbine engine according to one of Claims 3 to 6, **characterized in that** a peripheral seal (11) is provided between the inner wall of the impact chamber (4) and the turbine disc (10) of the first turbine stage, wherein the said peripheral seal (11) is arranged on the inner edge of the baffle wall (5) formed by the turbine disc (10).

8. A gas turbine engine according to one of Claims 1 to 7, **characterized in that** aircooled turbine blades (12) with cooling ducts (13) are secured in the edge area of the turbine disc (10), the cooling ducts (13) being directly connected to the outlet (9) ofthe diagonal diffusor (2) by way of openings (14) in the baffle wall (5) formed by the turbine disc (10).

9. A gas turbine engine according to one of Claims 1 to 8, **characterized in that** a bearing chamber (15) of a turbine shaft (16) is arranged radially inside the diagonal diffusor (2).

## Revendications

1. Turbine à gaz comprenant un compresseur mixte (1) suivi d'un diffuseur mixte (2), caractérisée en ce que le diffuseur mixte (2) est muni d'une chambre de renvoi adjacente (4) pour dévier l'air du compresseur dans la direction opposée à la direction principale d'écoulement à l'intérieur d'un volume annulaire (7) formé par une chambre de combustion annulaire (6) ou par plusieurs chambres de combustion séparées, réparties de manière annulaire.

2. Turbine à gaz selon la revendication 1, caractérisée en ce que la chambre de renvoi (4) et une paroi de renvoi (5) sont prévues dans la zone de sortie (9) du diffuseur mixte.

3. Turbine à gaz selon la revendication 1 ou 2, caractérisée en ce que la chambre annulaire de combustion (6) ou les différentes chambres de combustion et le diffuseur mixte (2), sont prévus dans un boîtier annulaire commun (8).

4. Turbine à gaz selon l'une des revendications 1 à 3, caractérisée en ce que le compresseur mixte (1) est l'étage de sortie d'un compresseur axial à plusieurs étages.

5. Turbine à gaz selon l'une des revendications 1 à 4, caractérisée par un disque de turbine (10) monté de manière à ce qu'une partie de la turbine forme la paroi renvoi (5).

6. Turbine à gaz selon l'une des revendications 3 à 5, caractérisée en ce que la paroi de renvoi (5) est formée par la zone radialement à l'extérieur du disque (10) du premier étage de turbine.

7. Turbine à gaz selon l'une des revendications 3 à 6, caractérisée en ce qu'entre la paroi intérieure de la chambre de renvoi (5) et le disque de turbine (10) du premier étage de turbine, il est prévu un joint périphérique (11) sur le bord intérieur de la paroi de renvoi (5) formée par le disque de turbine (10).

8. Turbine à gaz selon l'une des revendications 1 à 7, caractérisée en ce que les aubes de turbine (12) refroidies par de l'air, comportant des canaux de refroidissement (13), sont fixées dans la zone du bord du disque de turbine (10), ces canaux étant reliés, par des orifices (14) dans la paroi de renvoi (5) formée par le disque de turbine, directement avec la sortie (9) du diffuseur mixte (2).

9. Turbine à gaz selon l'une des revendications 1 à 8, caractérisée en ce qu'une chambre de palier (15) de l'axe de turbine (16) est prévue radialement à l'intérieur du diffuseur mixte (2).
